# EUROPEAN PATENT SPECIFICATION

(11) **EP 4 245 052 B1**
(45) Date of publication and mention of the grant of the patent: **22.07.2026**
(21) Application number: 21700047.0
(22) Date of filing: 05.01.2021
(51) Int. Cl.: H04W 12/088, H04W 12/033, H04L 61/4511

(54) **CONTENT FILTERING SUPPORT FOR PROTOCOLS WITH ENCRYPTED DOMAIN NAME SERVER**
UNTERSTÜTZUNG VON INHALTSFILTERUNG FÜR PROTOKOLLE MIT VERSCHLÜSSELTEM DOMÄNENNAMENSERVER
SUPPORT DE FILTRAGE DE CONTENU POUR PROTOCOLES AVEC SERVEUR DE NOM DE DOMAINE CHIFFRÉ

(30) Priority: 11.11.2020 EP 20382975
(43) Date of publication of application: 20.09.2023
(73) Proprietor: Telefonaktiebolaget LM Ericsson (publ), 164 83 Stockholm (SE)
(72) Inventor: MUÑOZ DE LA TORRE ALONSO, Miguel, Angel, 28002 Madrid (ES)
(74) Representative: Ericsson
(86) International application number: PCT/EP2021/050087
(87) International publication number: WO 2022/100889

(56) References cited:
- WO-A1-2020/043319
- US-A1- 2020 145 876
- MOTOROLA MOBILITY ET AL: "Update of Solution 1 (UE-Assisted)", vol. SA WG2, no. Newport Beach, USA; 20180528 - 20180601, 2 June 2018 (2018-06-02), XP051536223, Retrieved from the Internet <URL:http://www.3gpp.org/ftp/tsg%5Fsa/WG2%5FArch/TSGS2%5F127BIS%5FNewport%5FBeach/Docs/S2%2D185812%2Ezip> [retrieved on 20180602]
- 3GPP: "3rd Generation Partnership Project; Technical Specification Group Services and System Aspects; Policy and Charging Control Framework for the 5G System; Stage 2 (Release 15)", 3GPP TS 23.503 V15.2.0, 19 June 2018 (2018-06-19), pages 1 - 67, XP055664698, Retrieved from the Internet <URL:https://portal.3gpp.org/desktopmodules/Specifications/SpecificationDetails.aspx?specificationId=3334> [retrieved on 20200204]
- INTEL ET AL: "UE requested PDU Session Modification", vol. SA WG2, no. Reno, Nevada, USA; 20171127 - 20171201, 21 November 2017 (2017-11-21), XP051379355, Retrieved from the Internet <URL:http://www.3gpp.org/ftp/tsg%5Fsa/WG2%5FArch/TSGS2%5F124%5FReno/Docs/> [retrieved on 20171121]
- HUITEMA PRIVATE OCTOPUS INC C: "Issues and Requirements for Server Name Identification (SNI) Encryption in TLS; rfc8744.txt", 28 July 2020 (2020-07-28), pages 1 - 8, XP015139685, Retrieved from the Internet <URL:https://tools.ietf.org/html/rfc8744> [retrieved on 20200728]

## Description

### Technical Field

The present invention relates to methods for allowing content control in a wireless communications network and to corresponding devices, network nodes, systems, and computer programs. In particular, the invention allows content control to be operated by a wireless communications network on a data packet flow from a server, even when the data packet flow implements an encryption of a domain name of the server.

### Background

The prior art is known from "S2-185812 - Update of Solution 1 (UE-Assisted)" from SA WG2 Meeting #127-bis which discloses a Packet Detection Rule for encrypted data flow detection based on AppKeys embedded into user-plane traffic.

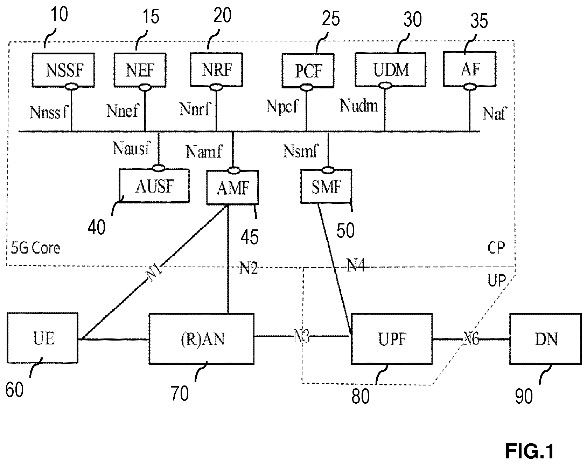

Fig. 1 shows a 5G NR architecture with service based interfaces. The 5G core network part comprises a Network Slice Selection Function, NSSF 10, a Network Exposure Function 15, a Network Repository Function, NRF, 20, a Policy Control Function, PCF, 25, a Unified Data Management, UDM, 30, an Application Function, AF, 35, an Authentication Server Function, AUSF, 40, an Access and Mobility Management Function, AMF, 45, and a Session Management Function, SMF, 50. A User Equipment, UE, 60, is connected to the Radio Access Network, RAN, 70, wherein a User Plane Function, UPF, 80 is provided to connect the UE 60 to a data network, DN, 90.

Having service based interfaces in the 5G Core Control Plane (CP) implies that the Network Functions, NFs, in the 5G Core CP provide services that are consumed by other NFs in the 5G Core CP.

The roles of these entities and the interfaces have been defined in the 3GPP TS 23.501 and the procedures have been described in TS 23.502.

The most relevant 5G System Architecture network functions for this invention are the following:
- PCF 25, supports unified policy framework to govern the network behaviour. In particular, PCF 25 provides Policy and Charging Control, PCC, rules to the Policy and Charging Enforcement Function, PCEF, for instance, SMF 50 and/or UPF 80, that enforce policy and charging decisions according to provisioned PCC rules; PCF 25 further provides policies to the user equipment 60;
- AMF 45, manages access of the user equipment, UE 60, for instance when UE 60 is connected through different access networks, and UE mobility aspects. AMF 45 can be used to forward rules from the PCF 25 to the UE 60.
- SMF 50 is responsible for Session establishment, modification and release, including selection and control of the UPF 80 entities. SMF 50 interacts with the UPF 80 over N4 Reference point using PFCP (Packet Flow Central Protocol) procedures. Moreover, SMF 50 receives PCC rules from PCF 25 and configures the UPF 80 accordingly. SMF 50 can in particular control the packet processing in the UPF 80 by establishing, modifying or deleting PFCP Sessions and by provisioning, for instance adding, modifying or deleting, PDRs, FARs, QERs and/or URRs per PFCP session, whereby a PFCP session may correspond to an individual PDU session or a standalone PFCP session not tied to any PDU session. Each PDR can contain a PDI specifying the traffic filters or signatures against which incoming packets are matched. Each PDR can be associated to the following rules providing the set of instructions to apply to packets matching the PDI:
   - one FAR, which contains instructions related to the processing of the packets, specifically forward, duplicate, drop or buffer the packet with or without notifying the CP function about the arrival of a DL packet,
   - zero, one or more QERs, which contains instructions related to the QoS enforcement of the traffic;
   - zero, one or more URRs, which contains instructions related to traffic measurement and reporting.
- UPF, 80, supports handling of user plane traffic based on the rules received from SMF 50, in particular packet inspection, for instance through PDRs, and different enforcement actions such as traffic steering, QoS, Charging/Reporting, for instance through any of FARs, QERs, URRs.

Traffic encryption is growing significantly in mobile networks and, at the same time, the encryption mechanisms are growing in complexity. In particular, most applications today are not based on HTTP cleartext, but instead they are based on HTTPS, that is, using the TLS protocol, Transport Layer Security. Additionally, a significant part of the traffic is based on QUIC transport, which has an encryption level higher than TLS. In the future, it is foreseen that most traffic will be based on QUIC transport or on other kinds of encrypted protocols.

The TLS protocol specifies an extension known as Server Name Indication, SNI. It is common for content servers to host multiple origins behind a single IP-address. In order to route application flows to the correct server without having to decrypt the entire flow, the SNI extension was introduced. The SNI extension is sent by the client in the Client Hello message and contains a clear text string of the domain name of the server that the client is attempting to connect to. Since the SNI field is sent in clear text, it is commonly used by onpath network elements in order to classify flows.

At IETF, Internet Engineering Task Force, it has been proposed to encrypt the Server Name Indication, SNI, extension for TLS protocol version 1.3. There are several IETF drafts on this point, for instance draft-ietf-tls-esni-05, which has been adopted by the TLS working group.

QUIC, also known as Quick UDP Internet Connection, is a UDP-based, stream-multiplexing, encrypted transport protocol. QUIC can be understood as being a UDP based replacement for TCP. QUIC is now under standardization at IETF and relies on TLS 1.3, so QUIC based applications will also have the Server Name Indication, SNI, extension encrypted in the future.

DNS, domain name system, is one of the fundamental building blocks of the Internet. It's used practically any time a website is visited, an email is sent, an IM conversation is started, etc. When a user opens an application, the DNS protocol is used to retrieve the server IP address/es for the target application domain name. DNS protocol today is usually unencrypted, such as DNS over UDP/TCP, but there are different IETF drafts proposing DNS encryption to prevent middleboxes to detect DNS traffic. There are different proposals at IETF, such as DNSSEC, DNS over HTTP/2, DOH, DNSCrypt, Quad9, etc. It is foreseen that in the 5G timeframe most DNS traffic will be encrypted.

It is thus evident from the above that there is a tendency toward end-to-end encryption of domain names between a user equipment and a server which is being accessed by the user equipment. While this increases privacy of the user, it also prevents a major drawback for the network operator, in particular in the field of content filtering.

More specifically, network operators today apply different traffic management actions, one of them being content filtering, in order to block traffic to forbidden sites. This allows network operators to comply with, for instance, parental requests for preventing their children from accessing violent or pornographic material on the Internet. Similarly, this allows network operators to comply with authority requirements for blocking traffic to illegal websites, etc.

Current filtering approaches rely on the domain name of the server which is being accessed by the user. It is currently not possible to apply content filtering for HTTP based applications when traffic is completely encrypted, in particular when the DNS and/or TLS/QUIC SNI are encrypted. This applies both to HTTPS, HTTP/HTTP2 over TLS, and to QUIC based applications, HTTP3 over QUIC. In addition, when DNS traffic is encrypted, such as with DNS over HTTPS, DoH, it is not even possible to support content filtering based on DNS inspection at UPF.

It is thus becoming increasingly impossible for network operators to provide content filtering.

### Summary

Accordingly, there is a need for techniques which allow the network operator to apply content filtering, even when the data packet flow is encrypted, such as with HTTPS and QUIC with SNI and/or DNS encryption. This need is met by the features of the independent claims. Further aspects are described in the dependent claims.

According to one aspect, a method for operating a policy control entity in a wireless communications network is provided, the wireless communications network being capable of providing a data packet flow for exchanging data packets between a user equipment and a content provider, the data packet flow encrypting a domain name of the content provider. The method can comprise a step of receiving a user policy profile from a data repository, the user policy profile comprising a content filtering policy for filtering the data packets. Furthermore, the method can comprise a step of transmitting, to a session control entity of the wireless communications network, a session policy based on the user policy profile, the session policy instructing a user plane entity of the wireless communications network to filter the data packets. Additionally, the method can comprise a step of transmitting, to an access management entity of the wireless communications network, a user policy based on the user policy profile, the user policy instructing the user equipment to add the domain name in unencrypted form to the data packets.

Another aspect furthermore relates to a policy control entity for a wireless communication network comprising a processing unit and a memory, the memory comprising instructions configured to cause the processing unit to carry out the steps described above for the method for operating the policy control entity.

Another aspect furthermore relates to a policy control entity for a wireless communications network, the wireless communications network being capable to of providing a data packet flow for exchanging data packets between a user equipment and a content provider, the data packet flow encrypting a domain name of the content provider. The policy control entity can comprise a module for receiving a user policy profile from a data repository, the user policy profile comprising a content filtering policy for filtering the data packets. Moreover, the policy control entity can comprise a module for transmitting, to a session control entity of the wireless communications network, a session policy based on the user policy profile, the session policy instructing a user plane entity of the wireless communications network to filter the data packets. Furthermore, the policy control entity can comprise a module for transmitting, to an access management entity of the wireless communications network, a user policy based on the user policy profile, the user policy instructing the user equipment to add the domain name in un-encrypted form to the data packets.

Another aspect furthermore relates to a method for operating a user plane entity in a wireless communications network, the wireless communications network being capable of providing a data packet flow for exchanging data packets between a user equipment and a content provider, the data packet flow encrypting a domain name of the content provider. The method can comprise a step of receiving, from a session control entity of the wireless communications network, a session policy instructing the user plane entity to filter the data packets. The method can further comprise a step of receiving, from the user equipment, at least one data packet of the data packet flow comprising the domain name in un-encrypted form and a step of extracting the domain name from the at least one data packet. Additionally the method can comprise a step of filtering the data packets based on the session policy and the extracted domain name.

Another aspect furthermore relates to a user plane entity for a wireless communication network comprising a processing unit and a memory, the memory comprising instructions configured to cause the processing unit to carry out the steps described above for the method for operating the user plane entity.

Another aspect furthermore relates to a user plane entity for a wireless communications network, the wireless communications network being capable of providing a data packet flow for exchanging data packets between a user equipment and a content provider, the data packet flow encrypting a domain name of the content provider. The user plane entity can comprise a module for receiving, from a session control entity of the wireless communications network, a session policy instructing the user plane entity to filter the data packets. The user plane entity can further comprise a module for receiving, from the user equipment, at least one data packet of the data packet flow comprising the domain name in un-encrypted form, and a module for extracting the domain name from the at least one data packet. The user plane entity can further comprise a module for filtering the data packets based on the session policy and the extracted domain name.

Another aspect furthermore relates to a method for operating a user equipment connectable to a wireless communications network for establishing a data packet flow for exchanging data packets between the user equipment and a content provider, the data packet flow encrypting a domain name of the content provider. The method can comprise a step of adding, to at least one data packet of the data packet flow, the domain name in un-encrypted form. The method can further comprise a step of transmitting the at least one data packet to a user plane entity of the wireless communications network.

Another aspect furthermore relates to a user equipment connectable to a wireless communication network comprising a processing unit and a memory, the memory comprising instructions configured to cause the processing unit to carry out the steps described above for the method for operating the user equipment.

Another aspect furthermore relates to a user equipment connectable to a wireless communications network for establishing a data packet flow for exchanging data packets between the user equipment and a content provider, the data packet flow encrypting a domain name of the content provider. The user equipment can comprise a module for adding, to at least one data packet of the data packet flow, the domain name in un-encrypted form. The user equipment can further comprise a module for transmitting the at least one data packet to a user plane entity of the wireless communications network.

Another aspect furthermore relates to a system comprising at least two entities selected from any of the entities above.

A further aspect relates to a computer program comprising comprising program code to be executed by at least one processing unit of a policy control entity, a user plane entity, a user equipment, wherein execution of the program code causes the processing unit to carry out a method as mentioned above for the respective entity.

It is to be understood that the features mentioned above and features yet to be explained below can be used not only in the respective combinations indicated, but also in other combinations or in isolation without departing from the scope of the present invention. Features of the above-mentioned aspects and embodiments described below may be combined with each other in other embodiments unless explicitly mentioned otherwise.

Other devices, systems, methods, features and advantages will be or will become apparent to one with skill in the art upon examination of the following detailed description and figures. It is intended that all such additional systems, methods, features and advantages be included within this description, be within the scope of the invention and be protected by the following claims.

### Detailed Description of Drawings

Various features of embodiments will become more apparent when read in conjunction with the accompanying drawings. In these drawings:
Figure 1 schematically illustrates the 5G NR reference architecture as defined by 3GPP;
Figure 2 schematically illustrates an example flowchart of a method carried out by a wireless communications network for implementing a data packet filtering;
Figure 3 schematically illustrates an example method for operating a policy control entity;
Figure 4 schematically illustrates an example method for operating a user plane entity;
Figure 5 schematically illustrates an example method for operating a user equipment;
Figures 6 and 7 schematically illustrates exemplary implementations of a policy control entity;
Figures 8 and 9 schematically illustrates exemplary implementations of a user plane entity;
Figures 10 and 11 schematically illustrates exemplary implementations of a user equipment.

### Detailed Description of Embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations, and elements illustrated in the drawings are not necessarily shown to scale. Rather, the various elements are represented such that their function and general purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Functional blocks may be implemented in hardware, software, firmware, or a combination thereof.

In general some aspects of the invention propose a mechanism in which, whenever content filtering needs to be triggered, for instance when a policy control entity retrieves a subscriber profile which indicates content filtering on is to be applied, the policy control entity can instruct a user equipment to
- detect the domain name which an application on the user equipment requests to lower layers of the user equipment, for instance the FQDN domain in the DNS procedure, optionally and additionally, also the SNI, particularly for TLS/QUIC based applications; and
- mark traffic, such as IP Options header, with a token and with the above detected Domain Name and/or SNI.

In this manner the traffic from the user equipment can be identified by the network and the domain name can be retrieved. Still in general, alternatively or in addition, the policy control entity can instructs the user equipment to clear out its DNS cache to force the user equipment to trigger a DNS query. The above can apply to all the user equipment session traffic, but potentially on a per appld, i.e. application Id, basis. For instance, Google Chrome app or for any browser apps in UE such as Chrome, Firefox, Explorer, etc.

Still in general, some aspects of the invention propose that the user plane entity can detect the token and extract the Domain Name. In some implementation the user plane entity can run an ICAP client and send to an ICAP server the above domain name. The user plane entity can then allow/block traffic based on the returned category, such as Adult/Violence. This solution further allows for reporting traffic subject to content filtering, for instance to check if the user has tried to enter an adult/violence site.

In this manner, the proposed solution allows the network operator to trigger content filtering policies for user's application traffic, especially when the traffic is encrypted, for instance with DNS encryption and/or HTTPS/TLS or QUIC.

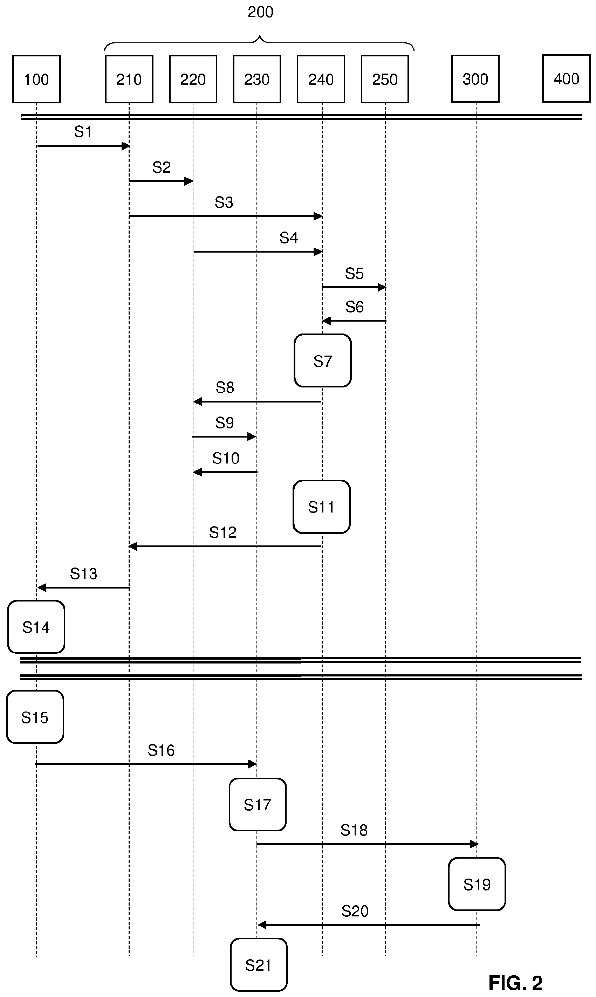

Figure 2 shows an example flowchart of a method carried out by a wireless communications network 200 for implementing filtering of traffic from a content provider 400 and a user equipment 100.

Within the context of the present application, the term "mobile entity" or "user equipment" (UE) 100 refers to a device for instance used by a person (i.e. a user) for his or her personal communication. It can be a telephone type of device, for example a telephone or a Session Initiating Protocol (SIP) or Voice over IP (VoIP) phone, cellular telephone, a mobile station, cordless phone, or a personal digital assistant type of device like laptop, notebook, notepad, tablet equipped with a wireless data connection. The UE may also be associated with nonhumans like animals, plants, or machines. A UE may be equipped with a SIM (Subscriber Identity Module) or electronic-SIM comprising unique identities such as IMSI (International Mobile Subscriber Identity), TMSI (Temporary Mobile Subscriber Identity), or GUTI (Globally Unique Temporary UE Identity) associated with the user using the UE. The presence of a SIM within a UE customizes the UE uniquely with a subscription of the user.

For the sake of clarity, it is noted that there is a difference but also a tight connection between a user and a subscriber. A user gets access to a network by acquiring a subscription to the network and by that becomes a subscriber within the network. The network then recognizes the subscriber (e.g. by IMSI, TMSI or GUTI or the like) and uses the associated subscription to identify related subscriber data. A user is the actual user of the UE, and the user may also be the one owning the subscription, but the user and the owner of the subscription may also be different. E.g. the subscription owner may be the parent, and the actual user of the UE could be a child of that parent.

The wireless communications network 200 is generally any communication network which allows a wireless communications with the user equipment 100. In some embodiments, the wireless communications network 200 can be an LTE network or a 5G NR network.

The wireless communications network 200 comprises an access management entity 210. The access management entity 210 can generally manage UE access, for instance when UE is connected through different access networks, and UE mobility aspects. In aspects of the invention, the access management entity 210 can be used to forward UE rules from the policy control entity 240 to the UE. In a 5G NR implementation, the access management entity 210 can be implemented by the AMF (Access and Mobility Management Function). In a LTE implementation, the access management entity 210 can be implemented by the Mobility Management Entity, MME

The wireless communications network 200 further comprises a user plane entity 230. The user plane entity 230 can generally at least support handling of user plane traffic based on the rules received from the session control entity 220. The user plane entity 230 can thus, for instance, carry out packet inspection and different enforcement actions such as QoS, charging, etc., specific to the user equipment 100. In a 5G NR implementation, the user plane entity 230 can be implemented by the UPF (User Plane Function). In a LTE implementation, the user plane entity 230 can be implemented by the PGW-U (User plane of the Packet Data Network Gateway) and/or by the TDF-U (User plane of the Traffic Detection Function).

The wireless communications network 200 further comprises a policy control entity 240. The policy control entity 240 can generally at least support unified policy framework to govern the behaviour of wireless communications network 200. For instance, the policy control entity 240 can provide PCC (Policy and Charging Control) rules to session control entity 220. In a 5G NR implementation, the policy control entity 240 can be implemented by the PCF (Policy Control Function). In a LTE implementation, the policy control entity 240 can be implemented by the PCRF (Policy and Charging Rules Function).

The wireless communications network 200 further comprises a session control entity 220. The session control entity 220 can generally at least receive PCC (Policy and Charging Control) rules from the policy control entity 240 and configure the user plane entity 230 accordingly. In a 5G NR implementation, the session control entity 220 can be implemented by the SMF (Session Management Function). In a LTE implementation, the session control entity 220 can be implemented by the PGW-C (Control plane of the Packet Data Network Gateway) and/or by the TDF-C (Control plane of the Traffic Detection Function).

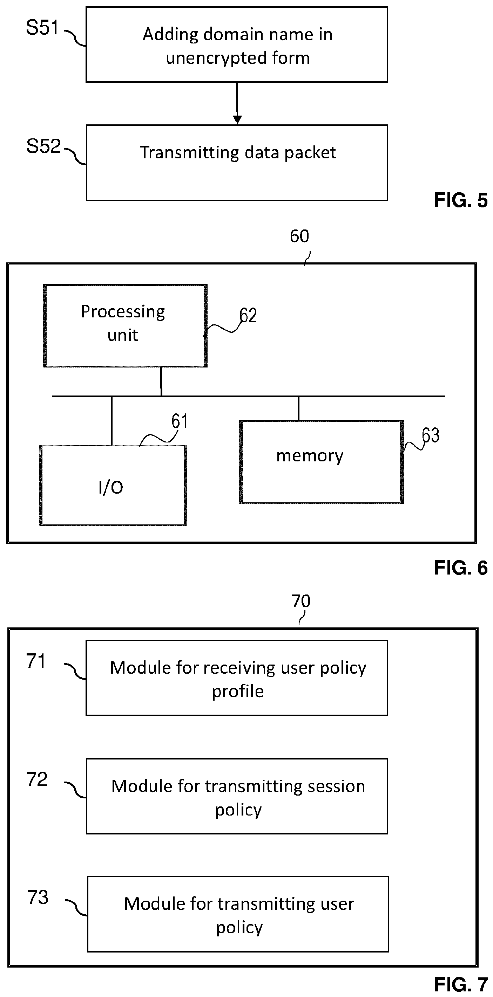

The wireless communications network 200 further comprises a data repository 250. The data repository 250 can generally at least allow storing and retrieving of data, such as policy and/or configuration data. In a 5G NR implementation, the data repository 250 can be implemented by the UDR (Unified Data Repository). In a LTE implementation, the data repository 250 can be implemented by the SPR (Subscription Profile Repository) as described, for instance, by 3GPP TS 23.203, particularly in figure 5.1.1 and the respective description.

The content provider 400 can be a node which can provide content to the user equipment 100 over the wireless communications network 200. For instance, the content provider 400 can be a server. In a 5G NR implementation, the content provider 400 can be implemented by the AF (Application Function). In a LTE implementation, the content provider 400 can be implemented by the SCS/AF (Service Capability Server/Application Function).

The server 300 can be an Internet Content Adaptation Protocol, ICAP, server, or in general any server allowing to retrieve information concerning the category of content provided by content provider 400.

It is understood that any of the user equipment 100, server 300, content provider 400, and any of the entities of the wireless communications network 200 can be implemented by hardware, firmware and/or software, alone or in combination with other entities.

The method illustrated in Figure 2 illustrates a possible behaviour of several of the entities described above. As it will become clear from the following description, the invention does not necessarily need all the steps illustrated in Figure 2 to be implemented.

In Figure 2 it is assumed that the subscriber associated to the user equipment 100 is known to the network 200 and is subject to content filtering policies. Figure 2 generally comprises a configuration section, occurring as part of a session establishment, identified as the part between the first and second horizontal double lines, and a use-case section, occurring as part of application traffic, identified as the part below the third horizontal double line. It will be clear that figure 2 does not illustrate all steps necessary for the session establishment or for the application traffic, but is limited to those steps which can be involved in the execution of the invention.

The network 200 is generally a wireless communications network in which a data packet flow is provided, or can be provided, for exchanging data packets between a user equipment 100 and a content provider 400, the data packet flow encrypting a domain name of the content provider 400. Preferably, the encryption of the domain name, and/or SNI, is performed by the user equipment in accordance with a predetermined protocol, such as TLS, QUIC or DNS over HTTPS. In the context of this document, the domain name can refer to the domain name of the content provider 400 and/or to the SNI of the content provider 400.

Since the protocol implemented for the data packet flow requires the encryption of the domain name, and/or of the SNI, it would normally be impossible for the network 200 to detect from and/or to which SNI and/or domain name the data packet flow is directed. This effectively prevent a content filtering to be implemented in the network 200. However, as will become clearer from the following, thanks to the implementation of the invention it is possible to further include the domain name and/or SNI in un-encrypted form in the data packet flow, so that the network 200 can recognize the packets to be filtered.

At a step S1, the user equipment 100 transmits to the access management entity 210 a message for triggering a session establishment procedure, for instance a PDU session establishment procedure. At a step S2, access management entity 210 transmits to the session control entity 220 a message for triggering the session establishment.

At a step S3, access management entity 210 transmits to the policy control entity 240 a message for requesting a user policy associated to the subscriber. At a step S4, session control entity 220 transmits to the policy control entity 240 a message for requesting a session policy associated to the subscriber.

At a step S5, the policy control entity 240 transmits to the data repository 250 a message for requesting a user policy profile associated with the user of the user equipment, that is, with the subscriber currently using the user equipment.

At a step S6, the data repository 250 transmits to the policy control entity 240 the user policy profile. In the context of the invention, the user policy profile comprises at least a content filtering policy for filtering the data packets. That is, potentially in addition to other policies which might be associated to the user, the user policy profile comprises data allowing to determine whether the user is subjected to a content filtering, for instance for filtering content associated to violence, pornography, etc. Various manners can be implemented for defining whether content filtering needs to be implemented and, if so, for which category of content, and they will not be discussed in details. In the embodiment illustrated in figure 2 it is assumed that the user policy profile indicates that, for the current user, a content filtering needs to be implemented.

At step S7, the policy control entity 240 generates policy rules, for instance policy and charging control rules, PCC, based on the user policy profile. The policy rules can comprise a session policy for the user plane entity.

The session policy can comprise rules for instructing the user plane entity 230 to filter the data packets. In particular, it can instruct the user plane entity 230 to filter data packets to and/or from domain names associated to content which has to be filtered, as will become clearer from the following description. The domain names can be extracted from the data packet flow between the user equipment 100 and the content provider 400. In some embodiment, the session policy can further comprise an identifier for indicating, to the user plane entity 230, transmission of the domain name in un-encrypted form.

In this manner, as will be described in the following, the user plane entity 230 can be instructed to extract the domain name from the data packets to and/or from the user equipment 100, or in general between the user equipment 100 and the content provider 400. The extraction can be simplified by recognizing the identifier, when this is transmitted by the user equipment 100, the invention is however not limited to it, and the user plane entity 230 could instead be instructed to parse all data packets for identifying and extracting domain names in un-encrypted form from the packet. Once extracted, the domain name can be used by the user plane entity 230 to determine if the user equipment is trying to access a content which, as indicated by the session policy, and thus by the user policy profile, is to be filtered. If this is the case, the user plane entity 230 can then stop the packets between the user equipment 100 and the content provider 400 whose domain name is deemed to be associated to content which should be filtered for the user.

At step S8, the policy control entity 240 transmits to the session control entity 220, a message comprising at least the session policy. In some embodiments, the step S8 can be part of a session establishment response, in response to the message at step S4.

At step S9, the session control entity 220 can transmit to the user plane entity 230, a message comprising at least the session policy. In this manner, the user plane entity 230 can be informed of the session policy. In some embodiments, the message transmitted at step S9 can be a session establishment request to the user plane entity 230, the present invention is however not limited thereto and the session policy related to the content filtering can also be transmitted before or after a session establishment request message. In particular, in some embodiments, the session control entity 220 can trigger a Packet Forwarding Control Protocol, PFCP, session establishment procedure towards the user plane entity 230, to indicate the Packet Detection Rules, PDR, that is, containing information for matching data packets to certain processing rules, and the corresponding enforcement actions, such as any of FARs, QERs, URRs, etc. for the PDU session. Specifically, in some embodiments, the session control entity 220 can request the user plane entity 230 to detect traffic marked with the identifier, where applicable, or more generally with an un-encrypted domain name, and to apply a content filtering policy as indicated by the session policy.

Although in the illustrated embodiment the session policy is transmitted from the policy control entity 240 to the user plane entity 230 through the session control entity 220, the present invention is not limited thereto. In some embodiments, the policy control entity 240 can transmit the session policy directly to the user plane entity 230.

At step S11, the policy control entity 240 generates a user policy for the user equipment.

The user policy can comprise rules for instructing the user equipment 100 to add domain name, for instance the domain name of the content provider 400, in un-encrypted form to the data packets. In particular, the user equipment 100 can be instructed to detect the domain name which an application on the user equipment 100 requests to lower layers of the user equipment 100, such as the FQDN domain in the DNS procedure and/or the SNI, in particular for TLS traffic. The user equipment 100 can also be instructed to include the domain name and/or SNI to one or more of the data packets of the data packets flow between the user equipment 100 and the content provider 400, preferably to at least one of the data packets which comprises the domain name in encrypted form.

In some embodiment, the user policy can further comprise an identifier for indicating, to the user plane entity 230, transmission of the domain name in un-encrypted form. The identifier is preferably the same which is comprised in the session policy, where applicable. In this manner it is possible to mark traffic, such as the IP Options header of the data packet, with the identifier, in addition to the with the above detected domain name and/or SNI.

In the description above the identifier, where applicable, has been indicated as being transmitted to the user plane entity 230 and to the user equipment 100. This allows the user equipment 100 to indicate to the user plane entity 230 the presence of the domain name, and/or SNI, in unencrypted form. For instance the identifier and the domain name, and/or SNI, in unencrypted form can be included in a data packet by the user equipment, preferably with the identifier first, so as to alert the user plane entity. However, the present invention is not limited thereto. In some cases, instead of transmitting the identifier to the user plane entity 230 and to the user equipment 100, the identifier might be known to one or both of those entities by having a predefined value, for instance defined by a telecommunication standard implemented by the user equipment 100 and the network 200.

Alternatively, or in addition, in some embodiments the user policy can further comprise an instruction to the user equipment to clear its DNS cache. This advantageously allows to trigger a DNS query at the user equipment, so that the transmission of the un-encrypted domain name in the DNS query can be recognized by the user plane entity 230.

In some embodiments, the user equipment 100 can be instructed to perform any of the instructions above for all session traffic. Alternatively, or in addition, the user policy can comprise instructions to the user equipment for applying one or more of the above steps on a per application basis. For instance the user policy can comprise one or more application identifier for identifying applications such as a browser, for instance Google Chrome, Firefox, Explorer, etc.

At step S12, the policy control entity 240 transmits a message comprising at least the user policy to the access management entity 210. In some embodiments, the message can be in response to the message at step S3.

At step S13, the access management entity 210 transmits a message comprising at least the user policy to the user equipment 100. In some embodiments, the message can be part of a session establishment response, in response to the message at step S1.

At step S14, the user equipment stores the user policy. This concludes the configuration of the user equipment 100 and of the network 200 for the purpose of content filtering, it will be clear that additional steps might be performed as necessary for completing the PDU session establishment.

Thanks to the above steps, the user equipment 100 can generally be instructed to include at least the domain name and/or SNI in the data packet flow in unencrypted form, even if the protocol defining the data packet flow only instructs the user equipment 100 to include it in encrypted form. That is, in addition to the encrypted for required by the protocol, the user equipment 100 can also include the domain name and/or SNI in the data packet flow in unencrypted form. This allows, as will become clear from the following, the user plane entity 230 to detect the un-encrypted domain name and/or SNI in the data packet flow, thereby allowing content filtering.

After completion of the session establishment, as schematically indicated by the second horizontal double line in figure 2, the user equipment 100 can exchange application traffic with the content provider, as schematically indicated by the third horizontal double line in figure 2.

In particular, the user can start an application on the user equipment 100 which requires exchanging data with the content provider 400. For instance, the application requires exchanging data with the domain example.com over TLS and/or QUIC.

At step S15, the user equipment 100 adds, to at least one data packet of the data packet flow of the application traffic, the domain name, and/or SNI, of the content provider 400 in un-encrypted form.

In preferred embodiments, the domain name and/or SNI which is added can be detected by the user equipment as the domain name to be used in a DNS query for the application traffic. In such embodiments, the previously described instruction to the user equipment 100 to clear its DNS cache has the advantageous effect of forcing the user equipment to perform a DNS query for every new domain name and/or SNI, thus ensuring detection for each new domain name. However, the present invention is not limited thereto. Alternatively, or in addition, the domain name and/or SNI could be extracted by the user equipment from the application request to transmit data through any data packet protocol, such as, for instance, TLS or QUIC, in addition to DNS over HTTPS. In this manner, even in the absence of a new DNS query, the invention can extract the domain name and/or SNI and proceed to add it to the data packet flow.

In preferred embodiments, where the identifier for indicating transmission of the domain name in un-encrypted form is implemented, the step S15 can also comprise adding the identifier to at least one data packet of the packet flow, preferably to the same data packet to which the domain name is added in un-encrypted form.

In some embodiments, the data packet to which the domain name is added in un-encrypted form preferably is a data packet of a data packet flow which comprises the domain name in encrypted form, such as, for instance, a data packet according to any of TLS, QUIC or DNS over HTTPS protocols implementing the domain name and/or SNI in encrypted form. Still preferably, the data packet to which the domain name is added in un-encrypted form preferably is a data packet comprising the domain name in encrypted form. Alternatively, or in addition, the data packet to which the domain name is added in un-encrypted form preferably is the first data packet sent from the user equipment to the content provider 400.

In some preferred embodiments, the domain name is added in un-encrypted form in the IP Options header of the data packet. Where implemented, the identifier can also be added to the IP Options header.

At step S16, the data packet to which the domain name has been added in un-encrypted form is transmitted from the user equipment to the user plane entity 230.

At step S17, the user plane entity 230 extracts the domain name from the at least one data packet. The recognition of the domain name can be implemented, for instance, by parsing all data packets from the user equipment 100 and looking for data sequences which are formatted as a domain name. Alternatively, or in addition, in embodiments in which the identifier is implemented, the parsing for the domain name can be triggered by the recognition of the identifier, in the data packet flow. This is particularly advantageous since recognizing an identifier, such as for instance a predetermined alphanumerical string, is computationally less intensive than recognizing a domain name based formatting rules. In referred embodiments, the distance between the identifier and the domain name can be predetermined, and/or indicated by the identifier, so as to further simplify the computational effort necessary for the detection and extraction of the domain name at the user plane entity 230. Still alternatively, or in addition, the identifier can comprise, or be followed by, a field indicating the length of the domain name, so as to further simplify the operation of the user plane entity 230.

At step S18, the user plane entity transmits a message, comprising at least the extracted domain name and/or SNI, to server 300. The server 300 is understood to be any server which, based on the domain name and/or SNI, can categorize the content provided by the domain name and/or SNI in a predetermined manner. That is, the server 300 can indicate to network 200, in a predetermined manner, what type, or level of, content is made available by the extracted domain name and/or SNI. It will be clear that any known manner for implementing step S18 based on the detection of the domain name in unencrypted form, as allowed by the protocols of the prior art, can be implemented.

In preferred embodiments, the server 300 can be implemented by an ICAP server, and the message of step S18 can thus be sent as a UPF message, from the user plane entity 230 acting as ICAP client, and including the domain name and/or SNI in the ICAP query message.

At step S19, the server 300 evaluates the content provided by the domain name and/or SNI received with the message of step S18. At step S20, the server 300 replies to the message of step S18 with the indication of the type and/or level of content provided by the domain name and/or SNI.

At step S21, based on the information obtained from server 300, and preferably also based on the session policy, the user plane entity 230 decides on whether to filter data packets between the user equipment 100 and the content provider 400. For instance, if the session policy allows violent content but not pornographic content, if the server 300 indicates violent content then the traffic is permitted, while if the server 300 indicates pornographic content then the traffic is blocked. Steps S18 to S21 thus allow implementing filtering of the data packets based on the session policy and the extracted domain name.

Although not illustrated in figure 2, in case packets are filtered, that is, blocked, by the user plane entity 230, the user plane entity 230 might also report this filtering to other entities in the network 200. This allows reporting attempted access of the subscriber to content which is not allowed, for instance in case of implementing the invention as part of a parental control system.

Still alternatively, or in addition, although not illustrated in figure 2, in case the packets are not filtered, the user plane entity 230 might proceed to remove the extracted domain name and/or SNI in un-encrypted form from the data packet flow. In this manner the security of the data packet flow between the network 200 and the content provider 400 can be enhanced, while still allowing the network 200 to implement content filtering, as described.

One possible, exemplary, embodiment of the messages exchanged in the method according to figure 2, written in pseudo-code and for instance with reference to a 5G implementation in which the optional identifier is indicated as tokenld and which also implements the optional DNS cache clearing, can for instance be formalized as:
- S1: PDU session establishment request
- S2: Nsmf_PDUSession_CreateSMContext Request
- S3: Npcf_AMPolicyControl_Create Request
- S4: Npcf_SMPolicyControl_Create Request
- S5: UDR Policy Profile Request comprising {SUPI}
- S6: UDR Policy Profile Response comprising {Content filtering policy}
- S7: PCF generating PCC rules
- S8: Npcf_SMPolicyControl_Create Response comprising {PCC Rules, including a request for detection of traffic marked with tokenld and to apply content filtering policy}
- S9: PFCP Session Establishment Request {PDRs/FARs/QERs/URRs, including a request for detection of traffic marked with tokenld and to apply content filtering policy}
- S10: PFCP Session Establishment Response
- S11: PCF requests UE to detect Domain Name, to mark (tokenld, Domain Name) and to clear-out the DNS cache
- S12: Npcf_AMPolicyControl_Create Response comprising {UE policy for marking (tokenld, Domain Name) and to clear-out the DNS cache}
- S13: Session Establishment Response comprising {UE policy for marking (tokenld, Domain Name) and to clear-out the DNS cache}
- S14: UE stores the UE policy
- S15: UE starts an application (example.com) over TLS or QUIC. UE detects the requested Domain name and marks the traffic with the tokenld and Domain name
- S16: application traffic comprising {tokenld, Domain name}
- S17: UPF detects tokenld and extracts the Domain name
- S18: ICAP query comprising {Domain name}
- S19: ICAP server finds the Domain name in the database in the violence content category
- S20: ICAP response comprising {content category=violence}
- S21: UPF, based on the content category, applies the corresponding action (e.g. block)

It will be clear that the above is not intended to limit the invention to the specific steps and that, as will be clear to those skilled in the art, not all steps must be implemented as in this exemplary implementation. It will further be clear that the implementation of one step as described above does not necessarily require all steps as being implemented as above.

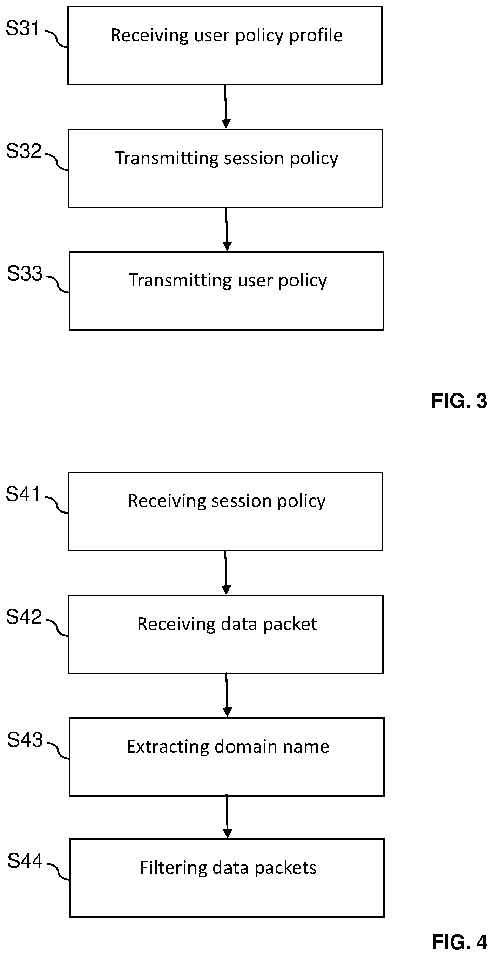

In particular, with reference to figures 2 and 3, an aspect can relate to a method for operating a policy control entity 240 in a wireless communications network 200, in which a data packet flow is provided for exchanging data packets between a user equipment 100 and a content provider 400, the data packet flow encrypting a domain name of the content provider 400. The method can comprise a step S6, S31, of receiving a user policy profile from a data repository 250, the user policy profile comprising a content filtering policy for filtering the data packets. The method can further comprise a step S8, S32, of transmitting to a session control entity 220 of the wireless communications network 200, a session policy based on the user policy profile, the session policy instructing a user plane entity 230 of the wireless communications network 200 to filter the data packets, and a step S12, S33, of transmitting to an access management entity 210 of the wireless communications network 200, a user policy based on the user policy profile, the user policy instructing the user equipment 100 to add the domain name in un-encrypted form to the data packets.

In this manner it is possible to obtain the user policy profile associated to the subscriber and create the corresponding session policy and user policy, as well as forwarding them to the respective recipients. This allows the user plane entity 230 and the user equipment 100 to be configured so as to be capable of carrying out content filtering.

In some embodiments, the session policy and/or the user policy can comprise an identifier for indicating, to the user plane entity 230, transmission of the domain name in un-encrypted form. As previously described, the identifier can simplify the operation of the user plane entity 230 by indicating the presence, and/or characteristic such as the length, of the domain name in un-encrypted form.

In some embodiments, the user policy can comprise a request to the user equipment 100 to clear its Domain Name System cache. As previously described, this forces a DNS query at the user equipment which can be used for adding the domain name in un-encrypted form. This ensures that the user plane entity can filter all traffic between the user equipment 100 and the content provider 400 by detecting only DNS queries, thus simplifying the recognition and extraction process at the user plane entity 230. Moreover, this implementation ensures that the user equipment implementation, for recognizing and inserting the domain name in un-encrypted form, can be simplified as it can be limited only to the case of DNS queries.

A further aspect, in particular with reference to figures 2 and 4, can relate to a method for operating a user plane entity 230 in a wireless communications network 200, in which a data packet flow is provided for exchanging data packets between a user equipment 100 and a content provider 400, the data packet flow encrypting a domain name of the content provider 400. The method can comprise a step S9, S41, of receiving from a session control entity 220 of the wireless communications network 200, a session policy instructing the user plane entity 230 to filter the data packets. The method can further comprise a step S16, S42, of receiving from the user equipment 100, at least one data packet of the data packet flow comprising the domain name in un-encrypted form, a step S17, S43 of extracting the domain name from the at least one data packet, and steps S18-S21, S44 of filtering the data packets based on the session policy and the extracted domain name.

Thanks to this implementation the user plane entity 230 can advantageously implement content filtering even in those cases where the domain name and/or SNI are encrypted by the protocol of the data packet flow, by recognizing the domain name and/or SNI in unencrypted form, added by the user equipment to the one in encrypted form according to the protocol.

In some embodiments, the extracting step S17, S43 can identify the at least one data packet comprising the domain name in un-encrypted form by recognizing an identifier, for indicating transmission of the domain name in un-encrypted form, in the at least one data packet.

That is, thanks to the presence of the identifier, the data packet comprising the domain name in un-encrypted form can be easily identified, as previously described. While in this case the same data packets is described as comprising both the domain name in un-encrypted form and the identifier, the invention is not limited thereto and the identifier could be comprised in a data packet different from, preferably antecedent, the data packet comprising the domain name in un-encrypted form.

In some embodiments the session policy can comprise the identifier. Thanks to this implementation it is possible to use an identifier which can potentially be different for each subscriber and/or for each PDU session established by the user equipment 100 on network 200 and/or for different applications of the user equipment 100, by appropriately providing the user equipment with respectively different identifiers. That is, the identifier can be used not only to identify the presence of the domain name and/or SNI in un-encrypted form, but also to provide additional information, such as the subscriber, and/or the application which is intending to access the content on content provider 400, etc.

A further aspect, in particular with reference to figures 2 and 5, can relate to method for operating a user equipment 100 connectable to a wireless communications network 200 for establishing a data packet flow for exchanging data packets between the user equipment 100 and a content provider 400, the data packet flow encrypting a domain name of the content provider 400. The method can comprise a step S15, S51, of adding to at least one data packet of the data packet flow, the domain name in un-encrypted form, and a step S16, S52 of transmitting the at least one data packet to a user plane entity 230 of the wireless communications network 200.

In this manner, the user equipment 100 can add the domain name in un-encrypted form even if the protocol of the data packet flow requires the domain name to be encrypted. That is, by providing the domain name also in un-encrypted form, the user equipment allows the network 200 to implement content filtering.

In some embodiments the step S15, S51, of adding can also comprise adding to the at least one data packet, an identifier for indicating transmission of the domain name in un-encrypted form. The presence of the identifier simplifies the recognition of the domain name in unencrypted form within the data packet flow by the network 200.

In some embodiments the method can also comprise, prior to the adding step S15, S51, a step of clearing a Domain Name System cache of the user equipment 100. In this manner, a DNS query can be ensured at the user equipment 100.

In some embodiments the method can also comprise, prior to the adding step S15, S51, a step S13 of receiving, from an access management entity 210 of the wireless communications network 200, a user policy instructing the user equipment 100 to add the domain name in un-encrypted form in the data packet flow. In this manner the user equipment can be provided with instructions for implementing the adding step S15, S51. This further allows the network 200 to provide instructions only to those user equipment 100 for which content filtering needs to be implemented.

In some embodiments, the user policy can comprise the identifier. In this manner the identifier can be forwarded to both the user equipment 100 and to the user plane entity 230, ensuring that both are provided with the same identifier. In preferred embodiments, this also allows the identifier provided to the user equipment to be configured for the specific session, and/or for the specific user equipment, and/or a plurality of identifiers to be provided for respective applications at the user equipment 100.

In any of the methods described above, the data packet flow can implement at least one of TLS, QUIC or DNS over HTTPS. As described, in recent implementations of those standards, the domain name and/or SNI is encrypted, which prevents the network 200 from implementing a content filtering. However, by providing the domain name and/or SNI in unencrypted form, as described above, the invention allows recognition of the domain name and/or SNI at the network 200, thus allowing for content filtering to be implemented.

Although the methods above have each been described independently with reference to a figure comprising a plurality of steps implemented by a plurality of nodes, it will be clear that the invention can be implemented by a subset of those steps, carried out by one or more nodes. Moreover, features and advantages of one step described for a given embodiment can also apply to the same step, and/or an analogous step, described for a different embodiment.

Moreover, although the description above has been discussed in terms of method steps, it will be clear that the invention can also be implemented by respective devices. In particular, figures 6, 8 and 10 respectively show an example schematic of a:
- policy control entity 240, 60
- user plane entity 230, 80
- user equipment 100,
each comprising a processing unit, an interface and a memory. The interface or transceiver is configured to allow communication with other entities in the wireless communications network and/or outside of it. The memory can comprise instructions configured to cause the processing unit to carry out any of steps described above with reference to the respective entity.

Moreover, the respective devices for implementing the invention can be also defined in terms of modules. In particular, figures 7, 9 and 11 respectively show various modules of a:
- policy control entity 240, 70
- user plane entity 230, 90
- user equipment 100, 110

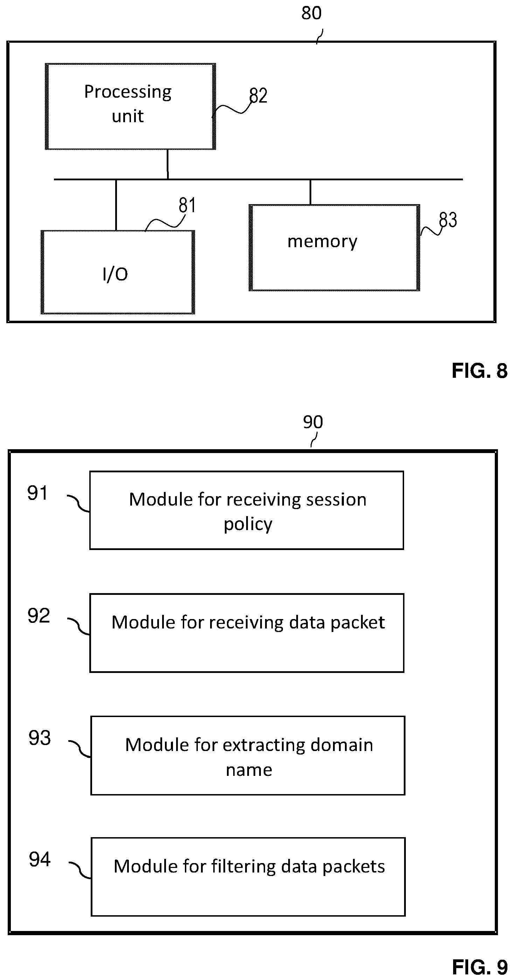

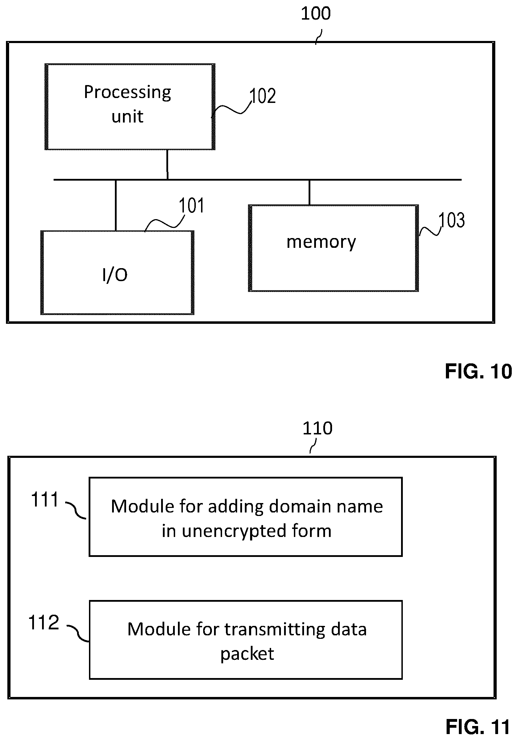

The modules generally allow each entity to implement any of the steps previously described in combination with the respective entity. More specifically, figure 7 schematically illustrates modules 71, 72, and 73, configured for carrying out the functionality of step S6, S8 and S12, or of step S31, S32 and S33, respectively. Similarly, figure 9 schematically illustrates modules 91, 92, 93 and 94 configured for carrying out the functionality of step S9, S16, S17 and S18-S21, or of step S41, S42, S43 and S44 respectively. Similarly, figure 11 schematically illustrates modules 111 and 112, configured for carrying out the functionality of step S15 and S16, or of step S51 and S52, respectively.

It will be clear that any of those entities can further comprise a module implementation of the other steps previously described.

Additionally, an embodiment can relate to a system comprising at least two entities selected from any of the entities described above, and in particular among the policy control entity 240, the user plane entity 230 and the user equipment 100.

As it results evident from the above, the various embodiments of the invention allow a solution for filtering traffic based on a category associated to a domain name, even for protocols which encrypt the domain name at the user equipment, making it unreadable for the network operator. By further adding the domain name in un-encrypted form to the data packet flow at the user equipment, the network can access it and carry out the filtering. Additionally, advantageous embodiments simplify the operation of the network by providing an identifier for indicating, to a user plane entity, transmission of the domain name in unencrypted form. In some further advantageous embodiments, an instruction to clear-out a DNS cache at the user equipment ensures that the lower levels of the user equipment are informed of the domain name for performing a DNS query, so that it can be ensured that the user equipment detects the domain name and includes it in un-encrypted form in the data packet flow.

## Claims

1. A method for operating a policy control entity (240) in a wireless communications network (200), in which a data packet flow is provided for exchanging data packets between a user equipment (100) and a content provider (400), the data packet flow encrypting a domain name of the content provider (400), the method being performed by the policy control entity (240) and comprising the steps of:
receiving (S6, S31) a user policy profile from a data repository (250), the user policy profile comprising a content filtering policy for filtering the data packets,
transmitting (S8, S32), to a session control entity (220) of the wireless communications network (200), a session policy based on the user policy profile, the session policy instructing a user plane entity (230) of the wireless communications network (200) to filter the data packets, and
transmitting (S12, S33), to an access management entity (210) of the wireless communications network (200), a user policy based on the user policy profile, the user policy instructing the user equipment (100) to add the domain name in un-encrypted form to the data packets.

2. The method according to claim 1, wherein the session policy and/or the user policy comprise an identifier for indicating, to the user plane entity (230), transmission of the domain name in un-encrypted form.

3. The method according to claim 1 or 2, wherein the user policy comprises a request to the user equipment (100) to clear its Domain Name System cache.

4. A method for operating a user plane entity (230) in a wireless communications network (200), in which a data packet flow is provided for exchanging data packets between a user equipment (100) and a content provider (400), the data packet flow encrypting a domain name of the content provider (400), the method being performed by the user plane entity (230) and comprising the steps of:
receiving (S9, S41), from a session control entity (220) of the wireless communications network (200), a session policy instructing the user plane entity (230) to filter the data packets,
receiving (S16, S42), from the user equipment (100), at least one data packet of the data packet flow comprising the domain name in un-encrypted form,
extracting (S17, S43) the domain name from the at least one data packet,
filtering (S18-S21, S44) the data packets based on the session policy and the extracted domain name.

5. The method according to claim 4, wherein the extracting step (S17, S43) identifies the at least one data packet comprising the domain name in un-encrypted form by recognizing an identifier, for indicating transmission of the domain name in un-encrypted form, in the at least one data packet.

6. The method according to claim 5, wherein the session policy comprises the identifier.

7. A method for operating a user equipment (100) connectable to a wireless communications network (200), the method being performed by the user equipment (100) and comprising the steps of:
establishing a data packet flow for exchanging data packets between the user equipment (100) and a content provider (400), the data packet flow encrypting a domain name of the content provider (400), adding (S15, S51), to at least one data packet of the data packet flow, the domain name in un-encrypted form,
transmitting (S16, S52) the at least one data packet to a user plane entity (230) of the wireless communications network (200).

8. The method according to claim 7, further comprising
adding (S15, S51), to the at least one data packet, an identifier for indicating transmission of the domain name in un-encrypted form.

9. The method according to claim 7 or 8 further comprising, prior to the adding step (S15, S51), a step of
clearing a Domain Name System cache of the user equipment (100).

10. The method according to any of claims 7 to 9 further comprising, prior to the adding step (S15, S51), a step of:
receiving (S13), from an access management entity (210) of the wireless communications network (200), a user policy instructing the user equipment (100) to add the domain name in un-encrypted form in the data packet flow.

11. The method according to claim 8 and 10, wherein the user policy comprises the identifier.

12. The method according to any previous claim, wherein the data packet flow implements at least one of TLS, QUIC or DNS over HTTPS.

13. A policy control entity (240, 60) for a wireless communications network (200), in which a data packet flow is provided for exchanging data packets between a user equipment (100) and a content provider (400), the data packet flow encrypting a domain name of the content provider (400), the policy control entity (240, 60) comprising a processing unit (62) and a memory (63), the memory (63) comprising instructions configured to cause the processing unit (62) to carry out the steps of:
receiving (S6, S31) a user policy profile from a data repository (250), the user policy profile comprising a content filtering policy for filtering the data packets,
transmitting (S8, S32), to a session control entity (220) of the wireless communications network (200), a session policy based on the user policy profile, the session policy instructing a user plane entity (230) of the wireless communications network (200) to filter the data packets, and
transmitting (S12, S33), to an access management entity (210) of the wireless communications network (200), a user policy based on the user policy profile, the user policy instructing the user equipment (100) to add the domain name in un-encrypted form to the data packets.

14. A user plane entity (230, 80) for a wireless communications network (200), in which a data packet flow is provided for exchanging data packets between a user equipment (100) and a content provider (400), the data packet flow encrypting a domain name of the content provider (400), the user plane entity (230, 80) comprising a processing unit (82) and a memory (83), the memory (83) comprising instructions configured to cause the processing unit (82) to carry out the steps of:
receiving (S9, S41), from a session control entity (220) of the wireless communications network (200), a session policy instructing the user plane entity (230, 80) to filter the data packets,
receiving (S16, S42), from the user equipment (100), at least one data packet of the data packet flow comprising the domain name in un-encrypted form,
extracting (S17, S43) the domain name from the at least one data packet, filtering (S18-S21, S44) the data packets based on the session policy and the extracted domain name.

15. A user equipment (100) connectable to a wireless communications network (200) , the user equipment (100) comprising a processing unit (102) and a memory (103), the memory (103) comprising instructions configured to cause the processing unit (102) to carry out the steps of:
establishing a data packet flow for exchanging data packets between the user equipment (100) and a content provider (400), the data packet flow encrypting a domain name of the content provider (400), adding (S15, S51), to at least one data packet of the data packet flow, the domain name in un-encrypted form,
transmitting (S16, S52) the at least one data packet to a user plane entity (230) of the wireless communications network (200).

## Patentansprüche

1. Verfahren zum Betreiben einer Richtliniensteuerungsinstanz (240) in einem drahtlosen Kommunikationsnetz (200), bei dem ein Datenpaketfluss zum Austauschen von Datenpaketen zwischen einer Benutzerausrüstung (100) und einem Inhaltsanbieter (400) bereitgestellt wird, wobei der Datenpaketfluss einen Domänennamen des Inhaltsanbieters (400) verschlüsselt, wobei das Verfahren von der Richtliniensteuerungsinstanz (240) durchgeführt wird und die folgenden Schritte umfasst:
Empfangen (S6, S31) eines Benutzerrichtlinienprofils von einem Datenspeicherort (250), wobei das Benutzerrichtlinienprofil eine Inhaltsfilterrichtlinie zum Filtern der Datenpakete umfasst,
Übermitteln (S8, S32), an eine Sitzungssteuerungsinstanz (220) des drahtlosen Kommunikationsnetzes (200), einer auf dem Benutzerrichtlinienprofil beruhenden Sitzungsrichtlinie, wobei die Sitzungsrichtlinie eine Benutzerebeneninstanz (230) des drahtlosen Kommunikationsnetzes (200) anweist, die Datenpakete zu filtern, und
Übermitteln (S12, S33), an eine Zugriffsverwaltungsinstanz (210) des drahtlosen Kommunikationsnetzes (200), einer auf dem Benutzerrichtlinienprofil beruhenden Benutzerrichtlinie, wobei die Benutzerrichtlinie die Benutzerausrüstung (100) anweist, den Domänennamen in unverschlüsselter Form zu den Datenpaketen hinzuzufügen.

2. Verfahren nach Anspruch 1, wobei die Sitzungsrichtlinie und/oder die Benutzerrichtlinie eine Kennung umfassen, um der Benutzerebeneninstanz (230) die Übermittlung des Domänennamens in unverschlüsselter Form anzuzeigen.

3. Verfahren nach Anspruch 1 oder 2, wobei die Benutzerrichtlinie eine Aufforderung an die Benutzerausrüstung (100) umfasst, ihren Domänennamenssystem-Cache zu löschen.

4. Verfahren zum Betreiben einer Benutzerebeneninstanz (230) in einem drahtlosen Kommunikationsnetz (200), bei dem ein Datenpaketfluss zum Austausch von Datenpaketen zwischen einer Benutzerausrüstung (100) und einem Inhaltsanbieter (400) bereitgestellt wird, wobei der Datenpaketfluss einen Domänennamen des Inhaltsanbieters (400) verschlüsselt, wobei das Verfahren von der Benutzerebeneninstanz (230) durchgeführt wird und die folgenden Schritte umfasst:
Empfangen (S9, S41), von einer Sitzungssteuerungsinstanz (220) des drahtlosen Kommunikationsnetzes (200), einer Sitzungsrichtlinie, welche die Benutzerebeneninstanz (230) anweist, die Datenpakete zu filtern.
Empfangen (S16, S42), von der Benutzerausrüstung (100), mindestens eines Datenpakets des Datenpaketstroms, das den Domänennamen in unverschlüsselter Form enthält,
Extrahieren (S17, S43) des Domänennamens aus dem mindestens einen Datenpaket,
Filtern (S18-S21, S44) der Datenpakete auf Grundlage der Sitzungsrichtlinie und des extrahierten Domänennamens.

5. Verfahren nach Anspruch 4, wobei der Extraktionsschritt (S17, S43) das mindestens eine Datenpaket, das den Domainnamen in unverschlüsselter Form umfasst, durch Erkennen einer Kennung, zum Anzeigen der Übermittlung des Domainnamens in unverschlüsselter Form, in dem mindestens einen Datenpaket identifiziert.

6. Verfahren nach Anspruch 5, wobei die Sitzungsrichtlinie die Kennung umfasst.

7. Verfahren zum Betreiben einer Benutzerausrüstung (100), die mit einem drahtlosen Kommunikationsnetz (200) verbunden werden kann, wobei das Verfahren von der Benutzerausrüstung (100) ausgeführt wird und die folgenden Schritte umfasst:
Einrichten eines Datenpaketflusses zum Austauschen von Datenpaketen zwischen der Benutzerausrüstung (100) und einem Inhaltsanbieter (400), wobei der Datenpaketfluss einen Domänennamen des Inhaltsanbieters (400) verschlüsselt,
Hinzufügen (S15, S51), zu mindestens einem Datenpaket des Datenpaketflusses, des Domänennamens in unverschlüsselter Form,
Übermitteln (S16, S52) des mindestens einen Datenpakets an eine Benutzerebeneninstanz (230) des drahtlosen Kommunikationsnetzes (200).

8. Verfahren nach Anspruch 7, weiter umfassend
Hinzufügen (S15, S51), zu dem mindestens einen Datenpaket, einer Kennung zum Anzeigen der Übermittlung des Domänennamens in unverschlüsselter Form.

9. Verfahren nach Anspruch 7 oder 8, weiter umfassend, vor dem Hinzufügungsschritt (S15, S51), einen Schritt zum
Löschen des Domänennamenssystem-Caches der Benutzerausrüstung (100).

10. Verfahren nach einem der Ansprüche 7 bis 9 weiter umfassend, vor dem Hinzufügungsschritt (S15, S51), einen Schritt zum:
Empfangen (S13), von einer Zugriffsverwaltungsinstanz (210) des drahtlosen Kommunikationsnetzes (200), einer Benutzerrichtlinie, welche die Benutzerausrüstung (100) anweist, den Domänennamen in unverschlüsselter Form zum Datenpaketfluss hinzuzufügen.

11. Verfahren nach Anspruch 8 und 10, wobei die Benutzerrichtlinie die Kennung umfasst.

12. Verfahren nach einem der vorstehenden Ansprüche, wobei der Datenpaketfluss mindestens eines von TLS, QUIC oder DNS über HTTPS implementiert.

13. Richtliniensteuerungsinstanz (240, 60) für ein drahtloses Kommunikationsnetz (200), bei dem ein Datenpaketfluss zum Austauschen von Datenpaketen zwischen einer Benutzerausrüstung (100) und einem Inhaltsanbieter (400) bereitgestellt wird, wobei der Datenpaketfluss einen Domänennamen des Inhaltsanbieters (400) verschlüsselt, wobei die Richtliniensteuerungsinstanz (240, 60) eine Verarbeitungseinheit (62) und einen Speicher (63) umfasst, wobei der Speicher (63) Anweisungen umfasst, die dafür konfiguriert sind, zu veranlassen, dass die Verarbeitungseinheit (62) die folgenden Schritte ausführt:
Empfangen (S6, S31) eines Benutzerrichtlinienprofils von einem Datenspeicherort (250), wobei das Benutzerrichtlinienprofil eine Inhaltsfilterrichtlinie zum Filtern der Datenpakete umfasst,
Übermitteln (S8, S32), an eine Sitzungssteuerungsinstanz (220) des drahtlosen Kommunikationsnetzes (200), einer auf dem Benutzerrichtlinienprofil beruhenden Sitzungsrichtlinie, wobei die Sitzungsrichtlinie eine Benutzerebeneninstanz (230) des drahtlosen Kommunikationsnetzes (200) anweist, die Datenpakete zu filtern, und
Übermitteln (S12, S33), an eine Zugriffsverwaltungsinstanz (210) des drahtlosen Kommunikationsnetzes (200), einer auf dem Benutzerrichtlinienprofil beruhenden Benutzerrichtlinie, wobei die Benutzerrichtlinie die Benutzerausrüstung (100) anweist, den Domänennamen in unverschlüsselter Form zu den Datenpaketen hinzuzufügen.

14. Benutzerebeneninstanz (230, 80) für ein drahtloses Kommunikationsnetz(200), bei der ein Datenpaketfluss zum Austauschen von Datenpaketen zwischen einer Benutzerausrüstung (100) und einem Inhaltsanbieter (400) bereitgestellt wird, wobei der Datenpaketfluss einen Domänennamen des Inhaltsanbieters (400) verschlüsselt, wobei die Benutzerebeneninstanz (230, 80) eine Verarbeitungseinheit (82) und einen Speicher (83) umfasst, wobei der Speicher (83) Anweisungen umfasst, die dafür konfiguriert sind, zu veranlassen, dass die Verarbeitungseinheit (82) die folgenden Schritte ausführt:
Empfangen (S9, S41), von einer Sitzungssteuerungsinstanz (220) des drahtlosen Kommunikationsnetzes (200), einer Sitzungsrichtlinie, welche die Benutzerebeneninstanz (230, 80) anweist, die Datenpakete zu filtern.
Empfangen (S16, S42), von der Benutzerausrüstung (100), mindestens eines Datenpakets des Datenpaketstroms, das den Domänennamen in unverschlüsselter Form enthält,
Extrahieren (S17, S43) des Domänennamens aus dem mindestens einen Datenpaket, Filtern (S18-S21, S44) der Datenpakete auf Grundlage der Sitzungsrichtlinie und des extrahierten Domänennamens.

15. Benutzerausrüstung (100), die mit einem drahtlosen Kommunikationsnetzwerk (200) verbunden werden kann, wobei die Benutzerausrüstung (100) eine Verarbeitungseinheit (102) und einen Speicher (103) umfasst, wobei der Speicher (103) Anweisungen enthält, die dafür konfiguriert sind, zu veranlassen, dass die Verarbeitungseinheit (102) die folgenden Schritte ausführt:
Einrichten eines Datenpaketflusses zum Austauschen von Datenpaketen zwischen der Benutzerausrüstung (100) und einem Inhaltsanbieter (400), wobei der Datenpaketfluss einen Domänennamen des Inhaltsanbieters (400) verschlüsselt,
Hinzufügen (S15, S51), zu mindestens einem Datenpaket des Datenpaketflusses, des Domänennamens in unverschlüsselter Form,
Übermitteln (S16, S52) des mindestens einen Datenpakets an eine Benutzerebeneninstanz (230) des drahtlosen Kommunikationsnetzes (200).

## Revendications

1. Procédé de fonctionnement d'une entité de contrôle de politique (240) dans un réseau de communications sans fil (200), dans lequel un flux de paquets de données est fourni pour l'échange de paquets de données entre un équipement d'utilisateur (100) et un fournisseur de contenu (400), le flux de paquets de données chiffrant un nom de domaine du fournisseur de contenu (400), le procédé étant exécuté par l'entité de contrôle de politique (240) et comprenant les étapes de :
réception (S6, S31) d'un profil de politique utilisateur à partir d'un référentiel de données (250), le profil de politique utilisateur comprenant une politique de filtrage de contenu pour filtrer les paquets de données,
transmission (S8, S32), à une entité de contrôle de session (220) du réseau de communications sans fil (200), d'une politique de session basée sur le profil de politique utilisateur, la politique de session demandant à une entité de plan utilisateur (230) du réseau de communications sans fil (200) de filtrer les paquets de données, et
transmission (S12, S33), à une entité de gestion d'accès (210) du réseau de communications sans fil (200), d'une politique utilisateur basée sur le profil de politique utilisateur, la politique utilisateur demandant à l'équipement d'utilisateur (100) d'ajouter le nom de domaine sous une forme non chiffrée aux paquets de données.

2. Procédé selon la revendication 1, dans lequel la politique de session et/ou la politique utilisateur comprennent un identifiant pour indiquer, à l'entité de plan utilisateur (230), la transmission du nom de domaine sous une forme non chiffrée.

3. Procédé selon la revendication 1 ou 2, dans lequel la politique utilisateur comprend une requête pour que l'équipement d'utilisateur (100) efface son cache de système de noms de domaine.

4. Procédé de fonctionnement d'une entité de plan utilisateur (230) dans un réseau de communications sans fil (200), dans lequel un flux de paquets de données est fourni pour l'échange de paquets de données entre un équipement d'utilisateur (100) et un fournisseur de contenu (400), le flux de paquets de données chiffrant un nom de domaine du fournisseur de contenu (400), le procédé étant exécuté par l'entité de plan utilisateur (230) et comprenant les étapes de :
réception (S9, S41), à partir d'une entité de contrôle de session (220) du réseau de communications sans fil (200), d'une politique de session demandant à l'entité de plan utilisateur (230) de filtrer les paquets de données,
réception (S16, S42), à partir de l'équipement d'utilisateur (100), d'au moins un paquet de données du flux de paquets de données comprenant le nom de domaine sous une forme non chiffrée,
extraction (S17, 543) du nom de domaine du au moins un paquet de données,
filtrage (S18-S21, S44) des paquets de données sur la base de la politique de session et du nom de domaine extrait.

5. Procédé selon la revendication 4, dans lequel l'étape d'extraction (S17, 543) identifie le au moins un paquet de données comprenant le nom de domaine sous une forme non chiffrée en reconnaissant un identifiant, pour indiquer la transmission du nom de domaine sous une forme non chiffrée, dans le au moins un paquet de données.

6. Procédé selon la revendication 5, dans lequel la politique de session comprend l'identifiant.

7. Procédé de fonctionnement d'un équipement d'utilisateur (100) connectable à un réseau de communications sans fil (200), le procédé étant exécuté par l'équipement d'utilisateur (100) et comprenant les étapes de :
établissement d'un flux de paquets de données pour l'échange de paquets de données entre l'équipement d'utilisateur (100) et un fournisseur de contenu (400), le flux de paquets de données chiffrant un nom de domaine du fournisseur de contenu (400),
ajout (515, 551), à au moins un paquet de données du flux de paquets de données, du nom de domaine sous une forme non chiffrée,
transmission (S16, 552) du au moins un paquet de données à une entité de plan utilisateur (230) du réseau de communications sans fil (200).

8. Procédé selon la revendication 7, comprenant en outre
l'ajout (S15, S51), au au moins un paquet de données, d'un identifiant pour indiquer la transmission du nom de domaine sous une forme non chiffrée.

9. Procédé selon la revendication 7 ou 8 comprenant en outre, avant l'étape d'ajout (S15, 551), d'une étape de
effacement d'un cache de système de noms de domaine de l'équipement d'utilisateur (100).

10. Procédé selon l'une quelconque des revendications 7 à 9 comprenant en outre, avant l'étape d'ajout (S15, 551), une étape de :
réception (S13), à partir d'une entité de gestion d'accès (210) du réseau de communications sans fil (200), d'une politique utilisateur demandant à l'équipement d'utilisateur (100) d'ajouter le nom de domaine sous une forme non chiffrée dans le flux de paquets de données.

11. Procédé selon les revendications 8 et 10, dans lequel la politique utilisateur comprend l'identifiant.

12. Procédé selon une quelconque revendication précédente, dans lequel le flux de paquets de données met en œuvre au moins un parmi TLS, QUIC ou DNS sur HTTPS.

13. Entité de contrôle de politique (240, 60) pour un réseau de communications sans fil (200), dans lequel un flux de paquets de données est fourni pour l'échange de paquets de données entre un équipement d'utilisateur (100) et un fournisseur de contenu (400), le flux de paquets de données chiffrant un nom de domaine du fournisseur de contenu (400), l'entité de contrôle de politique (240, 60) comprenant une unité de traitement (62) et une mémoire (63), la mémoire (63) comprenant des instructions configurées pour amener l'unité de traitement (62) à réaliser les étapes de :
réception (S6, S31) d'un profil de politique utilisateur à partir d'un référentiel de données (250), le profil de politique utilisateur comprenant une politique de filtrage de contenu pour filtrer les paquets de données,
transmission (S8, S32), à une entité de contrôle de session (220) du réseau de communications sans fil (200), d'une politique de session basée sur le profil de politique utilisateur, la politique de session demandant à une entité de plan utilisateur (230) du réseau de communications sans fil (200) de filtrer les paquets de données, et
transmission (S12, S33), à une entité de gestion d'accès (210) du réseau de communications sans fil (200), d'une politique utilisateur basée sur le profil de politique utilisateur, la politique utilisateur demandant à l'équipement d'utilisateur (100) d'ajouter le nom de domaine sous une forme non chiffrée aux paquets de données.

14. Entité de plan utilisateur (230, 80) pour un réseau de communications sans fil (200), dans lequel un flux de paquets de données est fourni pour l'échange de paquets de données entre un équipement d'utilisateur (100) et un fournisseur de contenu (400), le flux de paquets de données chiffrant un nom de domaine du fournisseur de contenu (400), l'entité de plan utilisateur (230, 80) comprenant une unité de traitement (82) et une mémoire (83), la mémoire (83) comprenant des instructions configurées pour amener l'unité de traitement (82) à exécuter les étapes de :
réception (S9, S41), à partir d'une entité de contrôle de session (220) du réseau de communications sans fil (200), d'une politique de session demandant à l'entité de plan utilisateur (230, 80) de filtrer les paquets de données,
réception (S16, S42), à partir de l'équipement d'utilisateur (100), d'au moins un paquet de données du flux de paquets de données comprenant le nom de domaine sous une forme non chiffrée,
extraction (S17, 543) du nom de domaine du au moins un paquet de données, filtrage (S18-S21, S44) des paquets de données sur la base de la politique de session et du nom de domaine extrait.

15. Équipement d'utilisateur (100) connectable à un réseau de communications sans fil (200), l'équipement d'utilisateur (100) comprenant une unité de traitement (102) et une mémoire (103), la mémoire (103) comprenant des instructions configurées pour amener l'unité de traitement (102) à réaliser les étapes de :
établissement d'un flux de paquets de données pour l'échange de paquets de données entre l'équipement d'utilisateur (100) et un fournisseur de contenu (400), le flux de paquets de données chiffrant un nom de domaine du fournisseur de contenu (400),
ajout (515, 551), à au moins un paquet de données du flux de paquets de données, du nom de domaine sous une forme non chiffrée,
transmission (S16, 552) du au moins un paquet de données à une entité de plan utilisateur (230) du réseau de communications sans fil (200).
